# EUROPÄISCHE PATENTSCHRIFT

(11) **EP 2 005 151 B1**
(45) Veröffentlichungstag und Bekanntmachung des Hinweises auf die Patenterteilung: **05.10.2011**
(21) Anmeldenummer: 07726434.9
(22) Anmeldetag: 20.02.2007
(51) Int. Cl.: G01N 27/407, G01N 27/417

(54) **SENSORELEMENT ZUR BESTIMMUNG VON VERSCHIEDENEN GASANTEILEN IN EINEM MESSGAS**
SENSOR ELEMENT FOR DETERMINING DIFFERENT GAS CONTENTS IN A MEASUREMENT GAS
ÉLÉMENT DE CAPTEUR POUR LA DÉTERMINATION DE DIFFÉRENTES COMPOSANTES DE GAZ DANS UN GAZ DE MESURE

(30) Priorität: 05.04.2006 DE 102006016033
(43) Veröffentlichungstag der Anmeldung: 24.12.2008
(73) Patentinhaber: Robert Bosch GmbH, 70442 Stuttgart (DE)
(72) Erfinder: CRAMER, Berndt, 71229 Leonberg (DE); WAHL, Thomas, 75172 Pforzheim (DE); SCHUMANN, Bernd, 71277 Rutesheim (DE); ROESSLER, Mario, 70176 Stuttgart (DE)
(86) Internationale Anmeldenummer: PCT/EP2007/051613
(87) Internationale Veröffentlichungsnummer: WO 2007/115855

(56) Entgegenhaltungen:
- EP-A2- 0 257 842
- EP-A2- 0 994 346
- DE-A1- 19 932 048
- DE-C1- 4 339 737
- DE-C1- 19 851 949

## Beschreibung

### Stand der Technik

Die vorliegende Erfindung betrifft ein Sensorelement zur Bestimmung von verschiedenen Gasanteilen in einem Messgas, insbesondere in einem Abgas einer Verbrennungskraftmaschine.

Sensorelemente zur Bestimmung von Gasanteilen in einem Messgas sind aus dem Stand der Technik in unterschiedlichen Ausgestaltungen bekannt. Im Bereich der Kraftfahrzeugtechnik sind beispielsweise Lambda-Sonden bekannt, welche den Sauerstoffgehalt im Abgas messen, um, basierend auf dem Messergebnis, eine Regelung des Verbrennungsvorgangs durchzuführen. Derartige Sensorelemente sind dabei im heißen Abgasstrom angeordnet, wobei sie sehr hohen Temperaturen ausgesetzt sind. Moderne Sensorelemente sind dabei als elektrochemische Festkörperelektrolytsensoren ausgebildet und weisen einen Heizer auf, um das Sensorelement auf Temperaturen von ca. 750° C aufzuheizen. Um einen weiter verbesserten Wirkungsgrad der Verbrennungskraftmaschine sowie eine Reduzierung von Abgasen zu ermöglichen, ist es jedoch notwendig, neben dem Sauerstoffgehalt des Abgases auch weitere Gasanteile im Abgas zu ermitteln.

Ein solcher Sensor ist beispielsweise aus der WO 00/57168 bekannt, wo neben einer Sauerstoff-Breitbandsonde auch eine Mischpotenzialelektrode zur Bestimmung weiterer Gasanteile vorgesehen ist. Vorteile der Erfindung

Das erfindungsgemäße Sensorelement zur Bestimmung von verschiedenen Gasanteilen in einem Messgas, insbesondere in einem Abgas einer Verbrennungskraftmaschine mit den Merkmalen des Anspruchs 1, umfasst eine Sauerstoff messende Sonde zur Bestimmung des Sauerstoffanteils im Messgas. Ferner umfasst das erfindungsgemäße Sensorelement eine erste und eine zweite Mischpotenzialelektrode. Mittels der ersten und zweiten Mischpotenzialelektrode ist es möglich, wenigstens einen weiteren Anteil eines anderen Gases im Messgas zu bestimmen. Ferner können erfindungsgemäß auch Potenzialunterschiede zwischen der ersten und zweiten Mischpotenzialelektrode sowie den Elektroden der Sauerstoff messenden Sonde erfasst werden und entsprechende Messsignale an eine Auswerteeinheit gegeben werden. Die vorliegende Erfindung ermöglicht es somit, in einem einzigen Sensorelement sowohl den Sauerstoffanteil als auch zumindest einen weiteren Anteil eines weiteren Gases zu bestimmen. Das erfindungsgemäße Sensorelement ist dabei einfach und kompakt aufgebaut und weist eine minimale Anzahl von Anschlüssen auf. Insbesondere kann beispielsweise ein Heizelement für die Sauerstoff messende Sonde auch als Heizelement für die Mischpotenzialelektroden verwendet werden.

Das Verwenden von Mischpotenzialelektroden bringt eine systembedingte Sauerstoffempfindlichkeit mit sich. Durch die Signalbildung zwischen zwei Mischpotenzialelektroden mit nahezu gleicher Sauerstoffempfindlichkeit kann ein vom Sauerstoffpotenzialdruck nur geringfügig abhängiges Signal erzeugt werden. Durch Kombination mit einer unabhängigen Sauerstoff messenden Sonde kann der Restfehler rechnerisch kompensiert werden.

Die Unteransprüche zeigen bevorzugte Weiterbildungen der Erfindung.

Vorzugsweise ist die erste Mischpotenzialelektrode aus einem anderen Material oder Materialgemisch als die zweite Mischpotenzialelektrode hergestellt. Dies ermöglicht neben der Bestimmung des Sauerstoffanteils zwei oder mehrere weitere Gasanteile im Messgas zu bestimmen.

Besonders bevorzugt sind die erste und die zweite Mischpotenzialelektrode mit einem Katalysatormaterial beschichtet. Dadurch ist es möglich, für die erste und zweite Mischpotenzialelektrode das gleiche Material zu verwenden, die beiden Mischpotenzialelektroden jedoch mit unterschiedlichen Katalysatormaterialien zu beschichten. Hierdurch können fertigungstechnische Vorteile sowie Kostenvorteile erhalten werden, da die beiden Mischpotenzialelektroden aus dem gleichen Ausgangsmaterial hergestellt werden können.

Zum Schutz der Mischpotenzialelektroden ist vorzugsweise eine zusätzliche äußere Schutzschicht vorgesehen. Dadurch können die beiden Mischpotenzialelektroden direkt im Abgasstrom angeordnet sein.

Um eine möglichst geringe Anzahl von Anschlüssen aufzuweisen, ist vorzugsweise ein Anschluss einer Heizvorrichtung des Sensorelements mit einem Anschluss einer Elektrode des Sensorelements zusammengelegt. Vorzugsweise ist dieser mit dem einen Anschluss des Heizelements zusammengelegte Anschluss einer Elektrode der Anschluss einer inneren Pumpelektrode der Sauerstoff messenden Sonde. Besonders bevorzugt liegen der eine Anschluss der Heizvorrichtung und der damit zusammengelegte Anschluss einer Elektrode auf Masse.

Vorzugsweise ist die mit einem Anschluss einer Heizvorrichtung zusammengelegte Elektrode eine innere Pumpelektrode einer Pumpzelle der Sauerstoff messenden Sonde.

Das Material der ersten und zweiten Mischpotenzialelektrode ist eine Platin-Gold-Legierung. Hierdurch kann das erfindungsgemäße Sensorelement neben dem Sauerstoff insbesondere auch Ammoniak (NH₃) und/oder Kohlenwasserstoffe und/oder Kohlenstoffmonoxid (CO) und/oder Wasserstoff (H₂) und/oder Stickoxyde erfassen.

Dabei weist die erste Mischpotenzialelektrode auf ihrer Oberfläche einen Goldgehalt auf, der größer als der der zweiten Mischpotenzialelektrode ist. Insbesondere weist die erste Mischpotenzialelektrode einen Goldgehalt von ≥ 1 Gew.% auf, insbesondere zwischen 10 Gew.% und 40 Gew.%, und die zweite Mischpotenzialelektrode weist einen Goldgehalt von < 10 Gew.%, insbesondere 0,1 Gew.% bis 3 Gew.%, auf.

Der Sauerstoff messende Sondenteil des Sensorelements ist vorzugsweise als Pumpstromsonde bzw. Proportional-Grenzstromsonde oder als Breitband-Lamdasonde ausgebildet. Unter einer reinen Pumpstromsonde wird eine Sonde verstanden, welche eine Pumpenzelle, aber keine Nernstzelle aufweist und die bei einer festen Pumpspannung betrieben werden kann. Im Gegensatz dazu weist eine Breitband-Lambdasonde eine Nemstzelle mit wenigstens einer Luftreferenzelektrode auf, die in einem Referenzluftraum angeordnet ist. Vorzugsweise wird einer Auswerteeinheit ein Pumpstrom zwischen der inneren und der äußeren Pumpelektrode der Pumpzelle der Lambdasonde und eine Spannung zwischen der ersten und der zweiten Mischpotenzialelektrode und/oder eine Spannung der ersten und/oder zweiten Mischpotenzialelektrode, bezogen auf die Luftreferenzelektrode und/oder die äußere Pumpelektrode, übermittelt.

Die Erfindung ermöglicht es somit, einen Multigassensor bereitzustellen, welcher neben einer Sauerstoffkonzentration noch eine Konzentration eines anderen Gasbestandteils in einem Messgas bestimmen kann. Das erfindungsgemäße Sensorelement weist dabei eine reduzierte Anzahl von Anschlüssen auf, so dass es besonders einfach und kostengünstig herstellbar ist.

### Zeichnung

Nachfolgend wird ein bevorzugtes Ausführungsbeispiel der Erfindung unter Bezugnahme auf die begleitende Zeichnung beschrieben. In der Zeichnung ist:

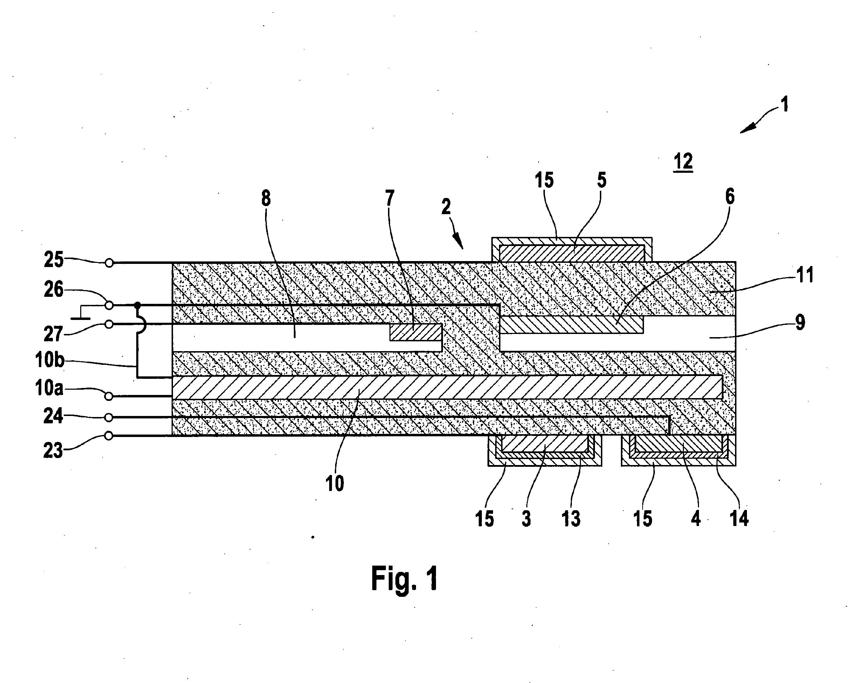

- Figur 1: eine schematische Schnittansicht eines Sensorelements gemäß einem Aus- führungsbeispiel der Erfindung.

### Beschreibung des Ausführungsbeispiels

Nachfolgend wird unter Bezugnahme auf Figur 1 ein Sensorelement 1 gemäß einem Ausführungsbeispiel der Erfindung beschrieben.

Wie in Figur 1 gezeigt, umfasst das Sensorelement 1 eine Lambdasonde 2, eine erste Mischpotenzialelektrode 3 und eine zweite Mischpotenzialelektrode 4. Die Lambdasonde 2 ist in diesem Ausführungsbeispiel als Breitband-Lambdasonde ausgebildet und umfasst eine äußere Pumpelektrode 5, eine innere Pumpelektrode 6 und eine Referenzelektrode 7. Die Referenzelektrode 7 ist in einem Referenzluftkanal 8 angeordnet. Die innere Pumpelektrode 6 ist in einem Messgaskanal 9 angeordnet. Wie in Figur 1 angedeutet, ist das Sensorelement 1 unmittelbar im Messgas 12 angeordnet. Die Breitband-Lambdasonde ist in bekannter Weise aus einem Festkörperelektrolyt 11 aufgebaut und umfasst ferner eine Heizvorrichtung 10.

Die erste Mischpotenzialelektrode 3 kann von einem ersten Katalysatormaterial 13 umgeben sein und die zweite Mischpotenzialelektrode 4 kann von einem zweiten Katalysatormaterial 14 umgeben sein. Ferner ist um die erste und zweite Mischpotenzialelektrode 3, 4 sowie die Außenpumpelektrode 5 eine Schutzschicht 15 vorgesehen, um eine Vergiftung, d.h. eine Beschädigung der Elektroden, zu verhindern. Es sei angemerkt, dass die erste und zweite Mischpotenzialelektrode keramisch oder metallisch sein können. Ferner kann die erste und zweite Mischpotenzialelektrode jeweils mit einem spezifischen Katalysator beschichtet sein, wobei die Mischpotenzialelektroden beispielsweise durch eine poröse Zirkonoxydschicht elektrisch von dem Katalysator isoliert sein können.

Die beiden Mischpotenzialelektroden 3, 4 können somit aus unterschiedlichen Materialien hergestellt sein. Zusätzlich kann eine oder beide Mischpotenzialelektroden noch mit einem Katalysator beschichtet sein. Wenn beide Mischpotenzialelektroden mit einem Katalysator beschichtet sind, kann entweder für beide Mischpotenzialelektroden der gleiche oder unterschiedliche Katalysatoren verwendet werden. Eine andere Alternative ist, die Elektroden der beiden Mischpotenzialelektroden aus dem gleichen Material herzustellen und diese mit unterschiedlichen Katalysatoren zu beschichten.

Um beispielsweise Ammoniak im Messgas bestimmen zu können, sind die beiden Mischpotenzialelektroden 3, 4 aus Platin-Goldlegierungen unterschiedlicher Zusammensetzung hergestellt. Hierdurch kann erreicht werden, dass eine der beiden Mischpotenzialelektroden sowohl auf Ammoniak als auch auf Kohlenwasserstoffe empfmdlich ist und die andere auf Kohlenwasserstoffe, nicht aber auf Ammoniak empfindlich ist. Die ammoniak-sensitive Mischpotenzialelektrode weist dabei einen höheren Goldgehalt auf als die ammoniak-unempfindliche Mischpotenzialelektrode. Der Goldgehalt der ammoniak-sensitiven Mischpotenzialelektrode ist dabei größer als 1 Gew.%, vorzugsweise 10 Gew.% bis 40 Gew.%. Der Goldgehalt der ammoniak-unempfindlichen Mischpotenzialelektrode ist dabei unter 10 Gew.%, vorzugsweise 0,1 bis 3 Gew.%. Ein derart ausgebildetes Sensorelement kann dabei die Messung einer Ammoniakkonzentration mit einer geringen Querempfindlichkeit gegenüber Sauerstoff und Kohlenwasserstoffen sicherstellen, da diese beiden Gase die Potenzialbildung der beiden Mischpotenzialelektroden auf ähnliche Weise beeinflussen.

Wie ferner in Figur 1 dargestellt, weist die äußere Pumpelektrode 5 einen Anschluss 25 auf. Die innere Pumpelektrode 6 weist einen Anschluss 26 auf, welcher auf Masse liegt. Die Referenzelektrode 7 weist einen Anschluss 27 auf. Die erste Mischpotenzialelektrode 3 weist ferner einen Anschluss 23 und die zweite Mischpotenzialelektrode einen Anschluss 24 auf. Die Heizvorrichtung 10 weist zwei Anschlüsse auf, nämlich einen ersten Anschluss 10a und einen zweiten Anschluss 10b. Der zweite Anschluss 10b liegt wie der Anschluss der inneren Pumpelektrode 6 ebenfalls auf Masse. Somit wird ermöglicht, dass das Sensorelement 1 insgesamt nur sechs Anschlüsse, nämlich einen Masseanschluss 26 für die innere Pumpelektrode 6 und den zweiten Anschluss 10b der Heizvorrichtung 10, sowie fünf weitere Anschlüsse 23, 24, 25 und 27 für die Elektroden 3, 4, 5 und 7 und einen ersten Anschluss 10a der Heizvorrichtung 10. Somit ermöglicht das erfindungsgemäße Sensorelement 1 die Bestimmung von verschiedenen Gasarten in einem Messgas 12, wobei das Sensorelement 1 eine reduzierte Anzahl von Anschlüssen aufweist.

Das Sensorelement 1 liefert einer Auswerteeinheit somit eine Vielzahl von Sensorsignalen. Neben einem Pumpstrom zwischen der inneren Pumpelektrode 6 und der äußeren Pumpelektrode 5 als Maß für die Sauerstoffkonzentration im Messgas 12, eine Spannung zwischen der ersten und zweiten Mischpotenzialelektrode 3, 4, sofern diese eine unterschiedliche Zusammensetzung aufweisen und/oder mit unterschiedlichen Katalysatormaterialien beschichtet sind. Ferner kann das Sensorelement 1 ein Potenzial der ersten Mischpotenzialelektrode 3 und/oder der zweiten Mischpotenzialelektrode 4, bezogen jeweils auf die Referenzelektrode 7 und/oder der äußeren Pumpelektrode 5 übermitteln. Das erfindungsgemäße Sensorelement kann somit besonders bevorzugt in Fahrzeugen im Abgas einer Verbrennungskraftmaschine verwendet werden. Neben dem Sauerstoffgehalt wird dabei insbesondere Ammoniak und/oder Stickoxide und/oder Kohlenwasserstoffe und/oder Kohlenmonoxid und/oder Wasserstoff detektiert.

## Patentansprüche

1. Sensorelement zur Bestimmung von verschiedenen Gasanteilen in einem Messgas (12), insbesondere in einem Abgas einer Verbrennungskraftmaschine, umfassend eine Sauerstoff messende Sonde (2) zur Bestimmung eines Sauerstoffanteils im Messgas (12), ferner umfassend eine erste und eine zweite Mischpotenzialelektrode (3, 4), **dadurch gekennzeichnet, dass** mittels der ersten und zweiten Mischpotenzialelektrode (3, 4) wenigstens ein weiterer Anteil eines anderen Gases im Messgas bestimmbar ist wobei das Material der ersten und zweiten Mischpotenzialelektrode (3, 4) eine Platin-Goldlegierung ist und wobei die erste Mischpotenzialelektrode (3) auf ihrer Oberfläche einen Goldgehalt aufweist, der größer als der der zweiten Mischpotenzialelektrode, insbesondere 10 Gew.% bis 40 Gew.%, ist.

2. Sensorelement nach Anspruch 1, **dadurch gekennzeichnet, dass** die erste Mischpotenzialelektrode (3) aus einem anderen Material als die zweite Mischpotenzialelektrode (4) hergestellt ist.

3. Sensorelement nach einem der vorhergehenden Ansprüche, **dadurch gekennzeichnet, dass** die erste Mischpotenzialelektrode (3) und zweite Mischpotenzialelektrode (4) jeweils mit einem Katalysatormaterial (13, 14) beschichtet sind.

4. Sensorelement nach Anspruch 1, **dadurch gekennzeichnet, dass** die erste Mischpotenzialelektrode (3) und zweite Mischpotenzialelektrode (4) aus einem gleichen Material hergestellt sind und die erste und zweite Mischpotenzialelektrode (3, 4) mit unterschiedlichen Katalysatormaterialien beschichtet sind.

5. Sensorelement nach einem der vorhergehenden Ansprüche, **dadurch gekennzeichnet, dass** die erste und zweite Mischpotenzialelektrode (3, 4) jeweils eine äußere Schutzschicht (15) aufweisen.

6. Sensorelement nach einem der vorhergehenden Ansprüche, **dadurch gekennzeichnet, dass** das Sensorelement eine Heizvorrichtung (10) aufweist und ein Anschluss (10b) der Heizvorrichtung (10) mit einem Anschluss (26) einer Elektrode zusammengelegt ist.

7. Sensorelement nach Anspruch 6, **dadurch gekennzeichnet, dass** die zusammengelegten Anschlüsse auf Masse zusammengelegt sind.

8. Sensorelement nach Anspruch 6 oder 7, **dadurch gekennzeichnet, dass** die Sauerstoff messende Sonde (2) eine Pumpzelle mit einer inneren Pumpelektrode (6) umfaßt und der Anschluss (26) der inneren Pumpelektrode (6) mit einem Anschluss (10b) der Heizvorrichtung (10) zusammengelegt ist.

9. Sensorelemente nach einem der vorhergehenden Ansprüche, **dadurch** gekenntzeichnet, dass die Sauerstoff messende Sonde (2) eine Breitband-Lambdasonde ist und das Sensorelement einer Auswerteeinheit Sensorsignale für einen Pumpstrom in die äußere und innere Pumpelektrode (5, 6) und Sensorsignale für eine Spannung zwischen der ersten und zweiten Mischpotenzialelektrode (3, 4) und/oder Sensorsignale für ein Potenzial der ersten Mischpotenzialelektrode (3) bezogen auf eine Luftreferenzelektrode, und/oder Sensorsignale für ein Potenzial der ersten Mischpotenzialelektrode (3) bezogen auf die äußere Pumpelektrode, und/oder Sensorsignale für ein Potenzial der zweiten Mischpotenzialelektrode (4) bezogen auf die Luftreferenzelektrode (7) und/oder Sensorsignale für ein Potenzial der zweiten Mischpotenzialelektrode (4) bezogen auf die äußere Püntpelektrode (5), ausgibt.

10. Sensorelement nach einem der Ansprüche 1 bis 10, **dadurch gekennzeichnet, dass** die Sauerstoff messende Sonde (2) eine Proportional-Grenzstromsonde ist.

## Claims

1. Sensor element for determining different gas portions in a measurement gas (12), in particular in an exhaust gas of an internal combustion engine, comprising an oxygen-measuring probe (2) for determining an oxygen portion in the measurement gas (12), also comprising a first mixed potential electrode (3) and a second mixed potential electrode (4), **characterized in that** at least one further portion of another gas in the measurement gas can be determined using the first and second mixed potential electrodes (3, 4), the material of the first and second mixed potential electrodes (3, 4) being a platinum/gold alloy, and the first mixed potential electrode (3) having, on its surface, a gold content which is greater than that of the second mixed potential electrode, in particular 10% by weight to 40% by weight.

2. Sensor element according to Claim 1, **characterized in that** the first mixed potential electrode (3) is produced from a different material from the second mixed potential electrode (4).

3. Sensor element according to one of the preceding claims, **characterized in that** the first mixed potential electrode (3) and the second mixed potential electrode (4) are each coated with a catalyst material (13, 14).

4. Sensor element according to Claim 1, **characterized in that** the first mixed potential electrode (3) and the second mixed potential electrode (4) are produced from the same material, and the first and second mixed potential electrodes (3, 4) are coated with different catalyst materials.

5. Sensor element according to one of the preceding claims, **characterized in that** the first and second mixed potential electrodes (3, 4) each have an outer protective layer (15).

6. Sensor element according to one of the preceding claims, **characterized in that** the sensor element has a heating apparatus (10), and a connection (10b) of the heating apparatus (10) is combined with a connection (26) of an electrode.

7. Sensor element according to Claim 6, **characterized in that** the combined connections are combined at earth.

8. Sensor element according to Claim 6 or 7, **characterized in that** the oxygen-measuring probe (2) comprises a pump cell with an inner pump electrode (6), and the connection (26) of the inner pump electrode (6) is combined with a connection (10b) of the heating apparatus (10).

9. Sensor element according to one of the preceding claims, **characterized in that** the oxygen-measuring probe (2) is a broadband lambda probe, and the sensor element of an evaluation unit outputs sensor signals for a pump current into the outer and inner pump electrodes (5, 6) and sensor signals for a voltage between the first and second mixed potential electrodes (3, 4) and/or sensor signals for a potential of the first mixed potential electrode (3) based on an air reference electrode and/or sensor signals for a potential of the first mixed potential electrode (3) based on the outer pump electrode and/or sensor signals for a potential of the second mixed potential electrode (4) based on the air reference electrode (7) and/or sensor signals for a potential of the second mixed potential electrode (4) based on the outer pump electrode (5).

10. Sensor element according to one of Claims 1 to 10, **characterized in that** the oxygen-measuring probe (2) is a proportional limit current flow probe.

## Revendications

1. Elément capteur destiné à la détermination de différentes proportions de gaz dans un gaz à mesurer (12), notamment dans un gaz d'échappement d'une machine à combustion interne, comprenant une sonde (2) qui mesure l'oxygène et est destinée à déterminer la proportion d'oxygène dans le gaz à mesurer (12), comprenant en outre une première et une deuxième électrode à potentiel mixte (3, 4), **caractérisé en ce que** l'on peut, au moyen des première et deuxième électrodes à potentiel mixte (3, 4), déterminer au moins une autre proportion d'un autre gaz dans le gaz à mesurer, le matériau desdites première et deuxième électrodes à potentiel mixte (3, 4) étant un alliage platine-or et la première électrode à potentiel mixte (3) comportant sur sa surface une teneur en or qui est supérieure à celle de ladite deuxième électrode à potentiel mixte, et notamment comprise entre 10 % en poids et 40 % en poids.

2. Elément capteur selon la revendication 1, **caractérisé en ce que** la première électrode à potentiel mixte (3) est réalisée en un autre matériau que la deuxième électrode à potentiel mixte (4).

3. Elément capteur selon l'une des revendications précédentes, **caractérisé en ce que** la première électrode à potentiel mixte (3) et la deuxième électrode à potentiel mixte (4) sont chacune revêtues avec un matériau catalyseur (13, 14).

4. Elément capteur selon la revendication 1, **caractérisé en ce que** la première électrode à potentiel mixte (3) et la deuxième électrode à potentiel mixte (4) sont réalisées en un même matériau et les première et deuxième électrodes à potentiel mixte (3, 4) sont revêtues avec différents matériaux catalyseurs.

5. Elément capteur selon l'une des revendications précédentes, **caractérisé en ce que** la première et la deuxième électrode à potentiel mixte (3, 4) comportent chacune une couche protectrice extérieure (15).

6. Elément capteur selon l'une des revendications précédentes, **caractérisé en ce que** ledit élément capteur comporte un dispositif de chauffage (10) et une connexion (10b) du dispositif de chauffage (10) est reliée au même endroit qu'une connexion (26) d'une électrode.

7. Elément capteur selon la revendication 6, **caractérisé en ce que** lesdites connexions reliées au même endroit sont reliées à la masse.

8. Elément capteur selon la revendication 6 ou 7, **caractérisé en ce que** la sonde (2) mesurant l'oxygène comprend une cellule de pompage avec une électrode interne de pompage (6) et la connexion (26) de l'électrode interne de pompage (6) est reliée au même endroit qu'une connexion (10b) du dispositif de chauffage (10).

9. Elément capteur selon l'une des revendications précédentes, **caractérisé en ce que** la sonde (2) mesurant l'oxygène est une sonde lambda à large bande et ledit élément capteur renvoie à une unité d'évaluation des signaux de capteur concernant un débit de pompage destiné aux électrodes de pompage externe et interne (5, 6) et des signaux de capteur concernant une tension entre les première et deuxième électrodes à potentiel mixte (3, 4) et/ou des signaux de capteur concernant un potentiel de la première électrode à potentiel mixte (3) rapporté à une électrode à air servant de référence et/ou des signaux de capteur concernant un potentiel de la première électrode à potentiel mixte (3) rapporté à ladite électrode de pompage externe et/ou des signaux de capteur concernant un potentiel de la deuxième électrode à potentiel mixte (4) rapporté à l'électrode à air servant de référence (7) et/ou des signaux de capteur concernant un potentiel de la deuxième électrode à potentiel mixte (4) rapporté à ladite électrode de pompage externe (5).

10. Elément capteur selon l'une des revendications 1 à 10, **caractérisé en ce que** la sonde (2) mesurant l'oxygène est une sonde à courant limite permettant une mesure proportionnelle.
